Europäisches Patentamt

European Patent Office

Office européen des brevets

(19)

(11)  **EP 1 217 190 B1**

(12)  **FASCICULE DE BREVET EUROPEEN**

(45) Date de publication et mention
de la délivrance du brevet:
**08.03.2006  Bulletin 2006/10**

(51) Int Cl.:
*F02C 9/46* *(2006.01)*     *F02C 9/28* *(2006.01)*

(21) Numéro de dépôt: **01403284.1**

(22) Date de dépôt: **18.12.2001**

(54) **Système hydromécanique de limitation de survitesse moteur**

Hydromechanische Vorrichtung für den Überdrehzahl-Schutz eines Motors

Hydromechanical system for engine overspeed protection

(84) Etats contractants désignés:
**DE FR GB IT**

(30) Priorité:  **22.12.2000  FR 0016899**
                **24.04.2001  FR 0105475**

(43) Date de publication de la demande:
**26.06.2002  Bulletin 2002/26**

(73) Titulaire: **HISPANO SUIZA**
**92707 Colombes Cedex (FR)**

(72) Inventeurs:
• **Maillard, David**
**77590 Bois le Roi (FR)**
• **Garassino, Alain**
**77390 Crisenoy (FR)**

• **Maillard, Claude**
**77870 Vulaines Sur Seine (FR)**
• **Dessenne, Caroline**
**92320 Chatillon (FR)**
• **Vegiotti, Isabelle**
**91100 Corbeil-Essonnes (FR)**

(74) Mandataire: **David, Alain et al**
**Cabinet Beau de Loménie**
**158, rue de l'Université**
**75340 Paris Cedex 07 (FR)**

(56) Documents cités:
**EP-A- 0 915 241       US-A- 4 602 479**
**US-A- 4 817 376**

**Description**

Domaine de l'invention

La présente invention se rapporte au domaine de l'injection de carburant dans les turbomachines et elle concerne plus particulièrement un dispositif de protection contre les survitesses.

Art antérieur

Dans les turbomachines, les meilleures performances sont obtenues pour des vitesses de rotation des organes tournants proches des limites maximums admissibles au delà desquelles une perte d'aubes de compresseur ou de turbine peut survenir. Or, une telle perte est de nature à engendrer une perforation du carter moteur dont les conséquences peuvent aller jusqu'à une destruction complète de la turbomachine.

Aussi, et comme le préconisent d'ailleurs les règlements internationaux relatifs à l'aviation civile, l'utilisation d'un dispositif de protection contre les survitesses s'avère indispensable pour éviter que la vitesse de ces organes tournants ne dépasse ces vitesses maximales autorisées.

Jusqu'à encore récemment, ces dispositifs de protection mettaient en oeuvre des régulateurs du type régulateur à masselotte de Watt comme l'illustre la demande internationale W089/02980. Mais, aujourd'hui, ces régulateurs mécaniques sont peu à peu remplacés par des régulateurs électroniques qui agissent directement sur le moteur en limitant l'alimentation en carburant à un débit de ralenti (US 4 602 479) ou en coupant l'alimentation en carburant de la chambre de combustion de la turbomachine comme dans la demande internationale W099/00585.

Cette dernière solution présente malheureusement le grave inconvénient d'impliquer l'engagement d'une procédure subséquente de redémarrage qui, dans certaines conditions particulières de vol (au décollage par exemple), peut s'avérer impossible à mettre en oeuvre et entraîner irrémédiablement la perte de l'aéronef.

Objet et définition de l'invention

La présente invention propose donc de pallier ces inconvénients avec un dispositif électronique de protection contre les survitesses qui n'entraîne pas un arrêt total du moteur et en outre garantit un régime de fonctionnement minimum assurant l'ensemble des servitudes de l'aéronef. Un but de l'invention est aussi de permettre au pilote d'agir directement sur le dispositif pour le déverrouiller et ainsi retrouver l'opérabilité du moteur.

Ces buts sont atteints par un dispositif de protection contre les survitesses dans une turbomachine dont la vitesse de rotation est contrôlée, au travers d'un circuit de commande électronique, par une manette de contrôle des gaz, comprenant des moyens pour limiter à un débit fixe prédéterminé Wps l'alimentation en carburant de ladite turbomachine lorsque ladite vitesse de rotation excède une vitesse maximale autorisée, caractérisé en ce qu'il comporte des moyens pour maintenir cette alimentation en carburant audit débit fixe prédéterminé lorsque ladite vitesse de rotation redevient inférieure à ladite vitesse maximale autorisée, et des moyens pour ramener cette alimentation en carburant à un débit Wr correspondant à un régime de ralenti lorsque ladite manette de contrôle des gaz envoie une commande de ralenti à ladite turbomachine par l'intermédiaire dudit circuit de commande électronique.

Avec la présente invention, en cas de survitesse l'alimentation en carburant du moteur est ramenée à un débit de carburant fixe prédéterminé Wps et maintenue à cette valeur de débit tant que la vitesse de rotation du moteur ne redescend pas en dessous d'une vitesse prédéterminée, la protection étant ensuite effacée par le pilote de l'aéronef en ramenant la manette de contrôle des gaz sur une position de ralenti Wr du régime moteur.

De préférence, les moyens de limitation de l'alimentation en carburant à un débit fixe prédéterminé Wps comportent un circuit électronique de détection de survitesse produisant un signal électrique (I) lorsqu'une vitesse de rotation de la turbomachine (N) excède une vitesse maximale autorisée (N_LIMIT), un électro-robinet de survitesse relié audit circuit électronique de détection de survitesse et délivrant un premier signal hydraulique (Px1) à partir dudit signal électrique, et un clapet de survitesse dont la position est commandée par ledit premier signal hydraulique de façon à faire décroître le débit de carburant injecté dans ladite turbomachine, par un dispositif de dosage auquel il est relié, jusque ledit débit fixe prédéterminé Wps. Selon le mode de réalisation envisagé, ledit débit fixe prédéterminé Wps est délivré soit par une sortie d'utilisation dudit doseur soit par un orifice d'utilisation dudit clapet de survitesse.

Le premier signal hydraulique correspond à une pression basse Pb lorsque ladite vitesse de rotation de la turbomachine est inférieure à ladite vitesse maximale autorisée et à une pression supérieure Psf lorsque cette vitesse de rotation (N) excède ladite vitesse maximale autorisée (N_LIMIT). De préférence, ladite pression supérieure Psf est égale à une pression haute P1 en sortie d'une pompe haute pression d'injection de carburant.

Selon un mode de réalisation avantageux, le maintien dudit débit fixe prédéterminé lorsque ladite vitesse de rotation de la turbomachine redevient inférieure à ladite vitesse maximale autorisée est obtenu par un second signal hydraulique (Px2) mis à ladite pression supérieure Psf et qui vient s'additionner audit premier signal hydraulique pour déplacer à l'encontre d'un ressort un tiroir hydraulique dudit clapet de survitesse. Ce second signal hydraulique est obtenu à partir d'un signal hydraulique de commande (Px0) généré au travers dudit dispositif de dosage à partir de ladite pression supérieure Psf.

La présente invention concerne également le procédé mis en oeuvre dans le dispositif de protection contre les survitesses précité.

Brève description des dessins

Les caractéristiques et avantages de la présente invention ressortiront mieux de la description suivante, faite à titre indicatif et non limitatif, en regard des dessins annexés sur lesquels :

- les figures 1a et 1b sont des vues schématiques partielles de deux variantes de réalisation d'un système d'injection de carburant d'une turbomachine pourvu d'un dispositif de protection contre les survitesses selon l'invention,
- les figures 2a et 2b sont des vues semblables à celles des figures 1a et 1b dans une position de détection d'une survitesse,
- les figures 3a et 3b sont des vues semblables à celles des figures 1a et 1b dans une position de verrouillage de la protection, et
- les figures 4a et 4b sont des vues semblables à celle des figures 1a et 1b dans une position de déverrouillage de la protection.

Description détaillée d'un mode de réalisation préférentiel

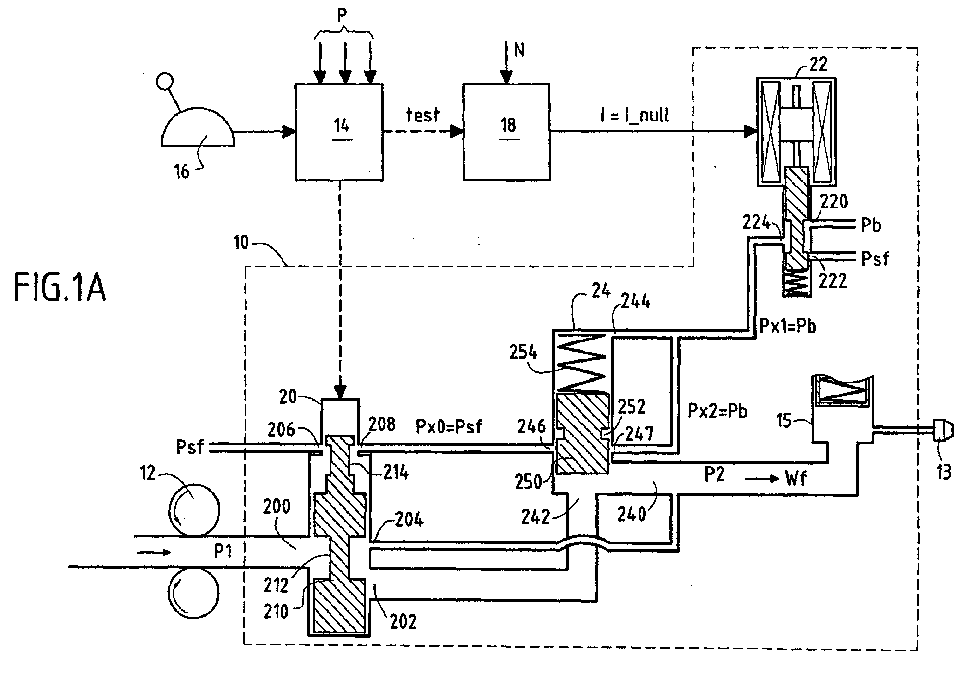

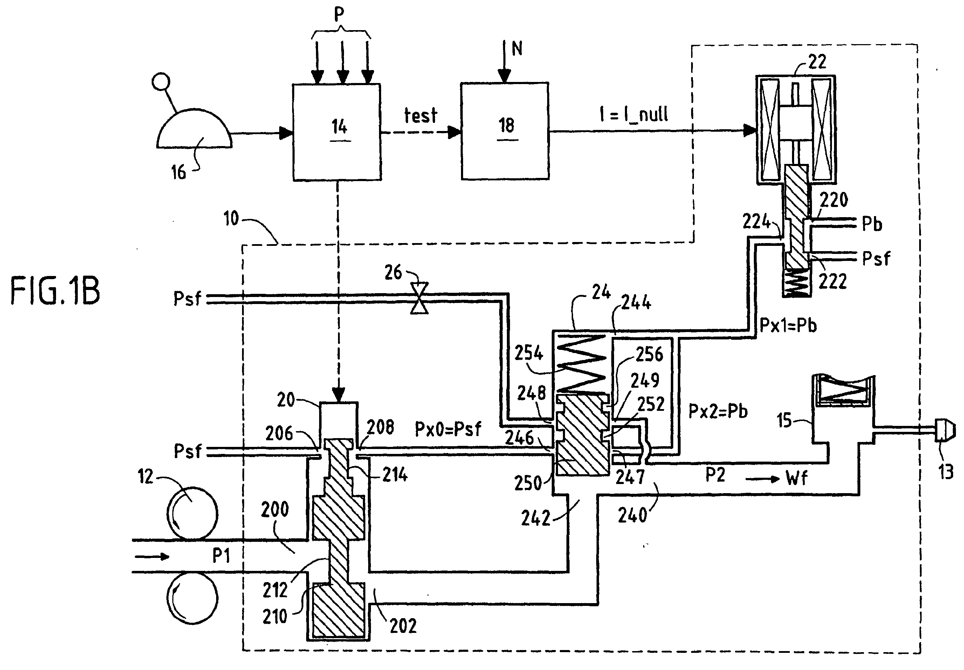

Une vue schématique d'une partie d'un système d'injection de carburant d'une turbomachine d'aéronef est illustrée aux figures 1A et 1B.

Un tel système d'injection de carburant est en général organisé autour d'un dispositif de dosage de carburant (fuel metering unit FMU) 10 destiné à contrôler le débit de carburant qui s'écoule entre une pompe haute pression 12 assurant une pressurisation de ce carburant soutiré dans un réservoir de carburant (non représenté) et une pluralité d'injecteurs de carburant 13 de la chambre de combustion de cette turbomachine à l'entrée desquels est disposée une soupape d'arrêt (shutoff valve 15) commandée par un électro-robinet d'arrêt (non représenté). On appellera « P1 » la haute pression HP en sortie de la pompe haute pression et « P2 » la pression en entrée des injecteurs. Un contrôle continu du débit de carburant fourni par le dispositif de dosage (régulation moteur) est assuré par un circuit électronique de commande 14 auquel ce dispositif est relié en fonction des paramètres moteur P et de la position d'une manette 16 de contrôle des gaz actionnée par le pilote de l'aéronef.

Le dispositif de dosage comporte essentiellement un élément hydraulique doseur (fuel metering valve FMV) 20 dont une première entrée d'alimentation en carburant 200 est reliée en sortie de la pompe haute pression 12, un électro-robinet de survitesse 22 dont une première entrée 220 est connectée à une pression basse Pb et une seconde entrée 222 est connectée à la pression supérieure Psf, et un clapet de survitesse 24 dont une sortie de pilotage 240 est reliée aux injecteurs, une première entrée d'extrémité 242 de ce clapet (en face arrière de ce clapet) étant reliée à une première sortie d'utilisation (orifice de dosage 202) de l'élément doseur 20 et une seconde entrée d'extrémité 244, opposée à la première entrée d'extrémité, étant reliée à une sortie 224 de l'électro-robinet de survitesse.

L'élément hydraulique doseur 20 intègre un tiroir hydraulique 210 qui peut se déplacer linéairement sous la commande du circuit électronique de commande 14. Ce tiroir comporte deux lumières annulaires 212, 214. La première 212 est destinée au dosage du carburant (définition du débit dosé pour le moteur) qui est reçu par la première entrée d'alimentation 200 et est refoulé par la première sortie d'utilisation 202. La seconde lumière 214 assure une communication entre une seconde entrée d'alimentation 206 reliée à la pression haute Psf (qui avantageusement correspond à la pression de sortie de la pompe haute pression) et une seconde sortie d'utilisation 208 reliée à un premier orifice d'alimentation 246 du clapet de survitesse 24, lequel par une première lumière annulaire 252 d'un tiroir hydraulique 250 de ce clapet peut être mis en communication avec un premier orifice d'utilisation 247 bouclé sur la seconde entrée d'extrémité 244 et donc également relié à la sortie 224 de l'électro-robinet de survitesse 22. La position du clapet de survitesse 24 est commandée par la mise à référence d'un ressort 254 à un signal hydraulique. Ainsi, la fermeture du clapet de survitesse est obtenue en appliquant à sa seconde entrée d'extrémité 244 un signal hydraulique égal à Psf qui s'ajoute alors à l'action du ressort 254. Quand le signal hydraulique s'efface, sa valeur devient Pb et l'action de la pression P2 en aval du doseur 20 devient supérieure à la force qu'exerce le ressort quand il est référencé à Pb et le clapet de survitesse s'ouvre.

L'électro-robinet de survitesse 22 est commandé par un circuit électronique de détection de survitesse 18 qui a pour fonction de détecter, à partir notamment de l'information d'un capteur de vitesse de rotation (N) du corps haute pression de la turbomachine, la vitesse limite de ce corps HP (N_LIMIT). Ainsi, si la vitesse du corps HP est supérieure à cette limite et le demeure, le circuit électronique de détection de survitesse 18 doit produire un signal de commande électrique (I) qui, au travers de l'électro-robinet 22 en générant un premier signal hydraulique (Px1), commandera la fermeture du clapet de survitesse 24.

Dans un premier mode de réalisation illustrée à la figure 1A, l'élément hydraulique doseur 20 comporte en outre une troisième sortie d'utilisation 204 reliée directement à la sortie de pilotage 240 du clapet de survitesse 24 en entrée des injecteurs et destinée à délivrer à ces injecteurs un débit stabilisé dit « de protection de survitesse », de valeur fixe prédéterminée Wps et correspondant à un débit proche (de préférence légèrement supérieur) à un régime de ralenti. Dans un second mode de réalisation alternatif, ce débit de survitesse Wps délivré aux injecteurs est obtenu non plus au travers du doseur mais au travers du clapet de survitesse 24, via une seconde lumière 256 de son tiroir hydraulique 250, qui comporte alors d'une part un second orifice d'alimentation 248 relié à la pression haute Psf au travers d'un diaphragme 26 calibré pour obtenir le débit de survitesse (et pouvant éventuellement être intégré dans les orifices du clapet de survitesse) et d'autre part un second orifice d'utilisation 249 reliée directement à la sortie de pilotage 240 du clapet de survitesse 24 en entrée des injecteurs (voir la figure 1B).

Dans un souci de simplification, les éléments du système d'injection qui ne concourent pas directement à l'invention ont été volontairement omis bien qu'ils figurent évidemment dans tout système d'injection. Il s'agit par exemple de la soupape de type « bypass » bouclée sur la pompe HP pour recycler le carburant délivré en excès ou d'éventuelles soupapes classiques de pressurisation ou encore l'électro-robinet d'arrêt mentionné précédemment.

Le système d'injection modifié selon l'invention est construit sur le principe que, dans un fonctionnement normal, il y a correspondance entre la position de la manette du pilote (TLA) et la position de l'élément hydraulique qui réalise le dosage (FMV) du débit carburant alimentant les injecteurs. Ainsi, si après une détection de survitesse, l'élément doseur répond comme prévu à la consigne manette du pilote (action manuelle), il peut alors être considéré que la chaîne de contrôle moteur (et notamment le circuit électronique de commande) qui est entre la manette et le doseur n'est pas à l'origine de la survitesse.

Le dispositif de protection contre les survitesses selon l'invention propose de mémoriser hydrauliquement l'état de protection de survitesse et de l'effacer également hydrauliquement une fois l'élément doseur revenu à une position commandée manuellement par le pilote au moyen de sa manette de vol. Le signal hydraulique de commande (Px0) qui assure à la fois ce verrouillage (en fournissant le débit nécessaire au verrouillage) et ce déverrouillage du clapet de survitesse 24 est construit à partir de la position de la seconde gorge 214 du tiroir doseur 210 par rapport à la seconde entrée d'alimentation 206 et la seconde sortie d'utilisation 208, cette gorge les mettant en communication quand la position du doseur est supérieure ou égale au débit prédéterminé de protection de survitesse Wps. Dans ce cas, le signal hydraulique de commande (Px0) est égal à (Psf). Si, au contraire, la position du doseur est inférieure à ce débit prédéterminé de protection de survitesse, la communication est interrompue et le signal hydraulique de commande (Px0) devient alors nul (P_null).

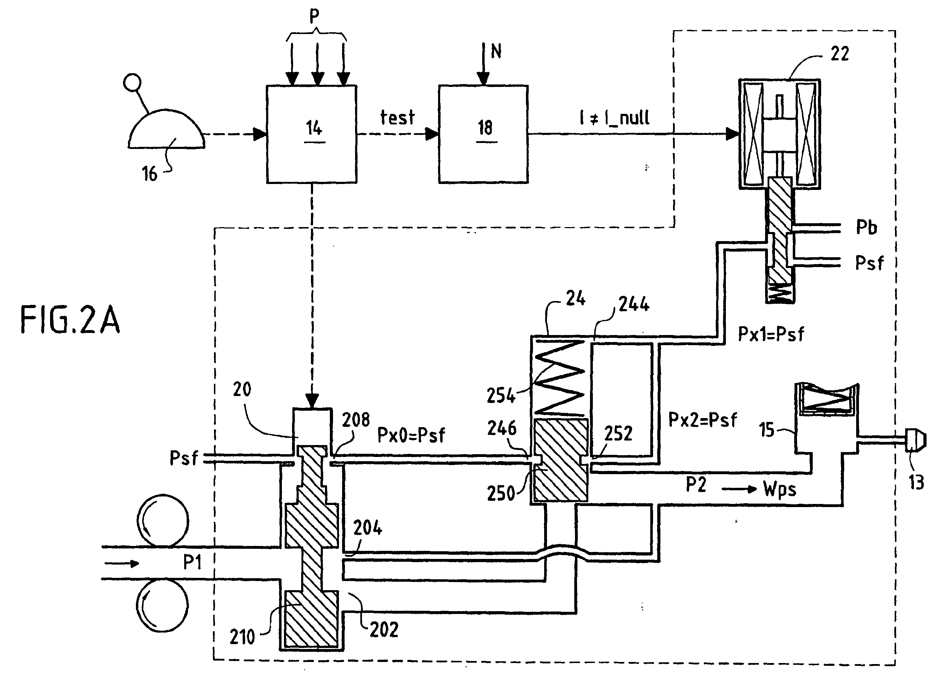

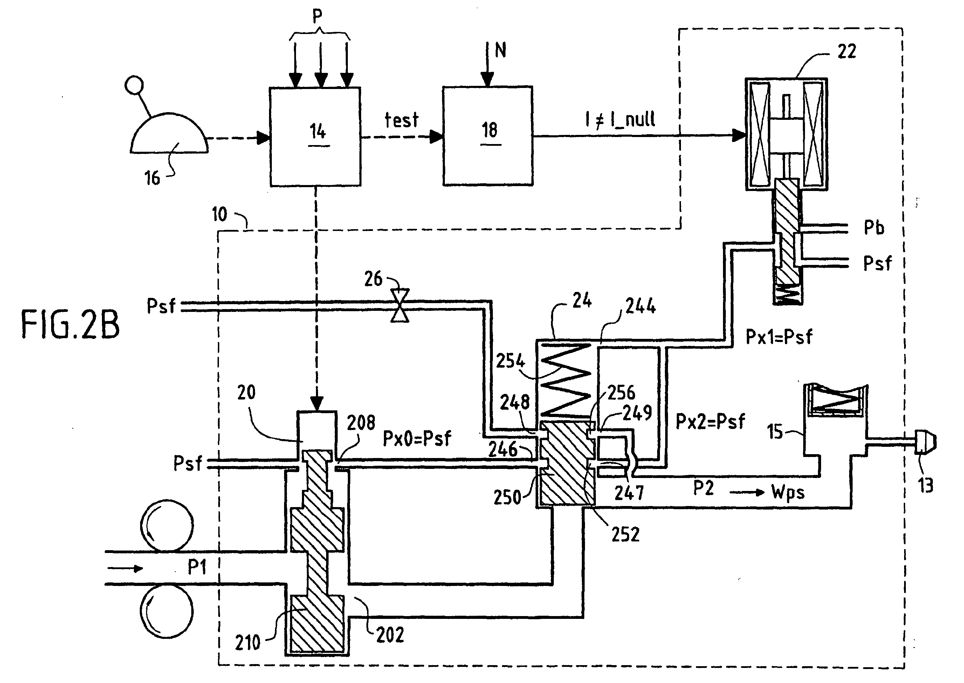

Le fonctionnement du dispositif de protection contre les survitesses selon l'invention sera maintenant décrit, selon le mode de réalisation retenu, en regard des figures 2A à 4A ou 2B à 4B.

Mais, revenons tout d'abord aux figures 1A et 1B qui montrent le dispositif dans un état de fonctionnement normal.

La turbomachine est alors à un régime supérieur au ralenti (réglé pour l'envoi d'un débit déterminé au moteur) correspondant à une position du tiroir 210 de l'élément hydraulique doseur qui assure donc une communication entre sa première entrée d'alimentation 200 et sa première sortie d'utilisation 202 (sa seconde entrée d'alimentation 206 qui est à la pression Psf communique également par la seconde gorge annulaire 214 du tiroir hydraulique doseur 210 avec la seconde sortie d'utilisation 208 mettant le signal hydraulique de commande Px0 à Psf). La vitesse (N) du corps HP est inférieure au seuil de déclenchement de protection de survitesse (N_LIMIT) et le circuit électronique de détection 18 n'envoie donc pas de signal électrique déclenchant l'action de protection (I = I_null). Le premier signal hydraulique (Pxl) de sortie de l'électro-robinet de survitesse est dans une position de repos à la pression basse (Pb) correspondant à une ouverture (désactivation) du clapet de survitesse 24. L'état des pressions est donc le suivant:

$$(Px1) = (Px2) = (Pb) \text{ et } (Px0) = (Psf).$$

Le clapet de survitesse 24 est maintenu ouvert par l'action des forces de pression (P2) en aval du doseur 20. Le débit carburant allant aux injecteurs Wf est supérieur au débit fixe prédéterminé Wps de protection de survitesse.

Les figures 2A et 2B illustrent l'état du système d'injection à l'issu de la détection d'une survitesse.

De l'état normal précédent, le corps HP part en survitesse pour des raisons inconnues. Le circuit électronique de détection de survitesse 18 observe que le régime du corps HP devient supérieur à sa limite prédéfinie (N_LIMIT) et élabore alors un courant électrique (I) différent de l'état de repos (I_null) précédent. Ce signal électrique agit comme un signal de fermeture sur l'électro-robinet 22 dont le premier signal hydraulique de sortie (Px1) est alors mis à la pression haute (Psf). L'action du ressort (K) ajoutée à cette pression (Psf) sur sa face arrière a pour effet de fermer le clapet de survitesse 24. Le débit de carburant va alors décroître jusqu'à sa valeur minimale Wps prédéterminée soit par la troisième sortie d'utilisation 204 du doseur 20 (figure 2A) soit par le second orifice d'utilisation 249 du clapet de survitesse 24 (figure 2B), selon le mode de réalisation retenu. Quand le clapet de survitesse arrive à sa position de fermeture (la première sortie d'utilisation 202 étant alors totalement obturée), la seconde sortie d'utilisation 208 du doseur 20 et le premier orifice d'alimentation 246 de ce clapet sont mis en communication par l'intermédiaire de la première gorge annulaire 252 générant un signal hydraulique complémentaire (Px2) qui en s'appliquant sur le clapet de survitesse côté ressort (sur sa face arrière) vient s'ajouter au premier signal hydraulique (Px1). L'état des pressions devient donc :

$$(Px1) = (Psf) \text{ et } (Px0) = (Px2) = (Psf),$$

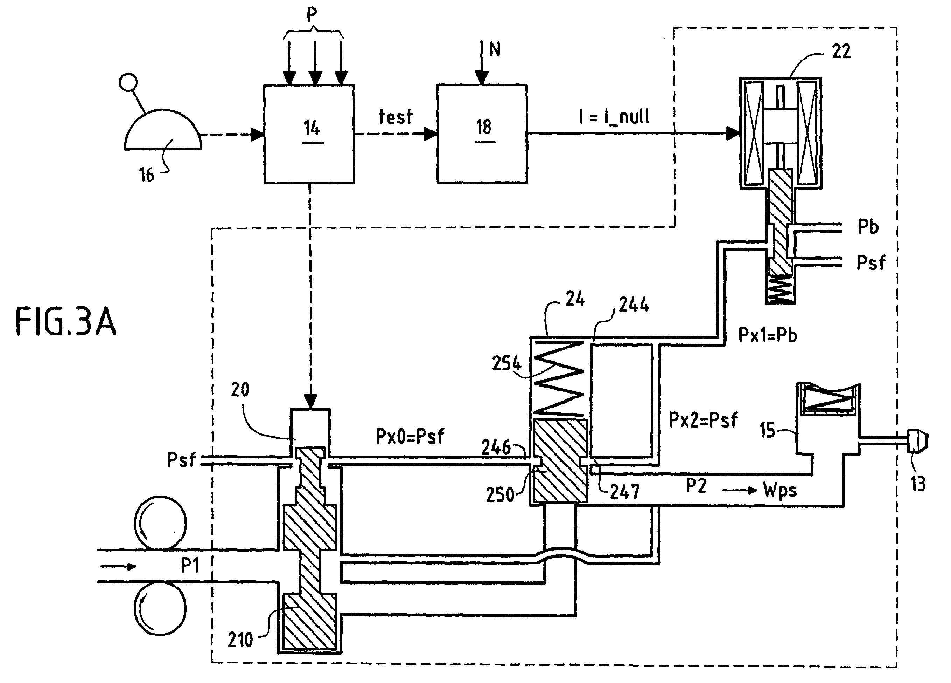

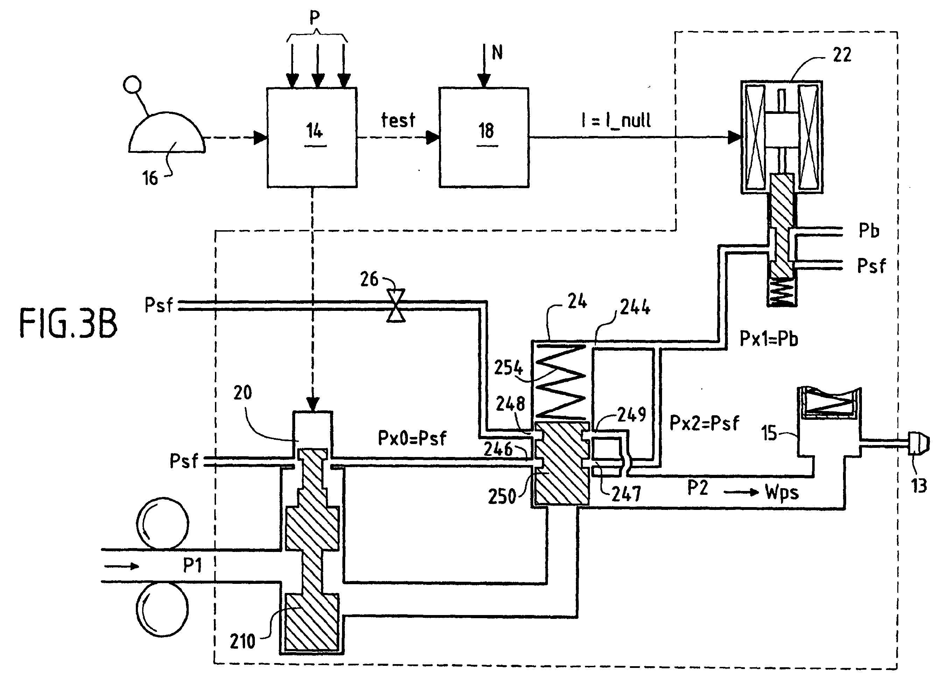

Les figures 3A et 3B illustrent l'état du système d'injection dans une position suivante de verrouillage de l'action de protection.

Le clapet de survitesse 24 est maintenant fermé et le débit envoyé aux injecteurs est saturé à la valeur fixe prédéterminé de Wps correspondant au débit de survitesse, la vitesse du corps HP décroît pour redevenir inférieure à la limite prédéfinie de (N_LIMIT). A ce moment le courant (I) redevient égal à sa valeur nulle initiale (I_null). L'électro-robinet 22 est alors désactivé et rebascule le signal (Px1) de (Psf) à (Pb) mais (Px2) demeurant toujours égal à (Psf) (le ressort 254 référencé à Psf permet de garder le clapet en position fermée) tant que la position de l'élément doseur reste supérieure à la valeur de ralenti fixée, le clapet de survitesse 24 est verrouillé en position fermeture et la turbomachine est toujours dans l'état de protection de survitesse avec un débit égal à Wps. Dans cette position de verrouillage, l'état des pressions est le suivant :

$$(Px1) = (Pb) \text{ et } (Px0) = (Px2) = (Psf).$$

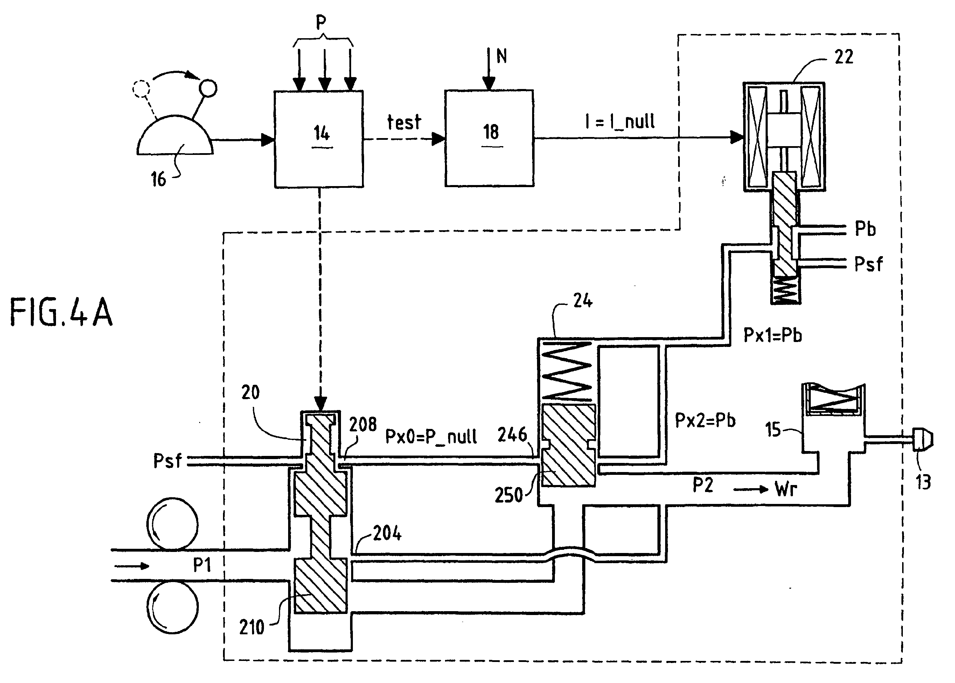

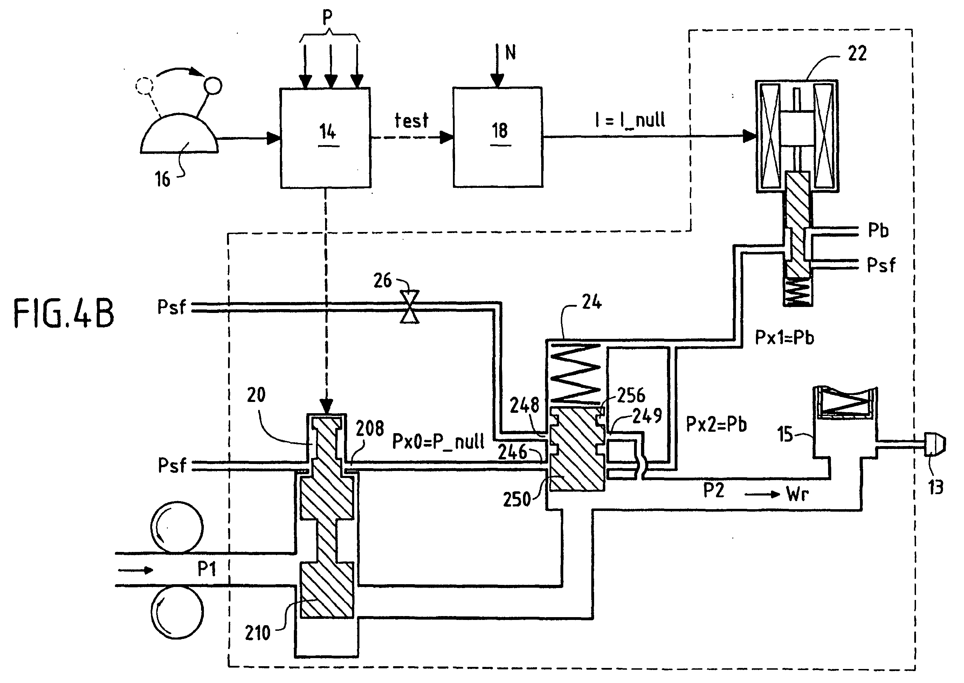

Les figures 4A et 4B illustrent l'état du système d'injection dans une position suivante de déverrouillage de l'action de protection.

Si le pilote ramène la manette 16 vers une position de ralenti moteur et que l'ensemble de la boucle de contrôle entre la manette et le doseur fonctionne normalement (c'est à dire notamment le circuit électronique de régulation moteur 14), l'élément doseur revient à une position correspondante de ralenti dans laquelle la communication entre la seconde sortie d'utilisation 208 du doseur 20 et le premier orifice d'alimentation 246 du clapet de survitesse 24 est interrompue. Le signal (Px0) chute alors à (P_null) et le signal (Px1) étant égal à (Pb), la sommation de (Px1) et (P_null) est donc égale à (Pb) provoquant ainsi l'ouverture du clapet de survitesse. On obtient ainsi son déverrouillage et la turbomachine se retrouve alors dans un régime de ralenti Wr < Wps avec l'état des pressions suivant :

$$(Px1) = (Px2) = (Pb) \text{ et } (Px0) = (P\_null).$$

Ainsi, en cas de survitesse le pilote n'est plus obligé comme antérieurement de couper le moteur de l'aéronef pour effacer la protection de survitesse. Il doit simplement ramener ce moteur à un régime de ralenti. Les dangers potentiels considérables résultant d'un arrêt en vol peuvent être ainsi évités.

On notera en outre que la configuration proposée du dispositif de protection contre les survitesses se prête bien à des tests de bon fonctionnement du clapet de survitesse tant au démarrage qu'à l'arrêt moteur.

Ainsi, durant la séquence de démarrage, le circuit électronique de détection de survitesse 18 peut envoyer un ordre de fermeture du clapet (I) ≠ (I_null) sur ordre du circuit de commande 14. Le premier signal hydraulique de l'électro-robinet (Px1) devient alors (Psf) et le clapet de survitesse 24 se ferme. L'élément doseur 20 est alors à une position de débit de rallumage qui est inférieure ou égale au débit de ralenti. Le signal de verrouillage (Px2) est nul. Lorsque ce test au démarrage est terminé, le courant devient nul (I) = (I_null), (Px1) devient égal à (Pb) et le clapet s'ouvre.

De même, Lorsque le pilote commande l'arrêt moteur en agissant sur le levier 16, le doseur 20 va vers sa butée de fermeture obturant la communication par la seconde gorge 214 et (Px0) = (P_null). Pendant la décroissance du régime HP, le circuit électronique de détection de survitesse 18 envoie un courant pour tester la fermeture du clapet de survitesse et on retrouve alors un séquencement des états identiques au cas de test au démarrage.

## Revendications

1. Dispositif de protection contre les survitesses dans une turbomachine dont la vitesse de rotation est contrôlée, au travers d'un circuit de commande électronique (14), par une manette de contrôle des gaz (16), le dispositif comportant des moyens (20, 22, 24) pour limiter à un débit fixe prédéterminé Wps l'alimentation en carburant de ladite turbomachine lorsque ladite vitesse de rotation excède une vitesse maximale autorisée, **caractérisé en ce qu'**il comporte en outre des moyens (20, 22, 24) pour maintenir cette alimentation en carburant audit débit fixe prédéterminé lorsque ladite vitesse de rotation redevient inférieure à ladite vitesse maximale autorisée, et des moyens (20, 22, 24) pour ramener cette alimentation en carburant à un débit Wr correspondant à un régime de ralenti lorsque ladite manette de contrôle des gaz envoie une commande de ralenti à ladite turbomachine par l'intermédiaire dudit circuit de commande électronique.

2. Dispositif de protection selon la revendication 1, **caractérisé en ce que** lesdits moyens de limitation de l'alimentation en carburant à un débit fixe prédéterminé Wps comportent un circuit électronique de détection de survitesse (18) produisant un signal électrique (I) lorsqu'une vitesse de rotation de la turbomachine (N) excède une vitesse maximale autorisée (N_LIMIT), un électro-robinet de survitesse (22) relié audit circuit électronique de détection de survitesse et délivrant un premier signal hydraulique (Px1) à partir dudit signal électrique, et un clapet de survitesse (24) dont la position est commandée par ledit premier signal hydraulique de façon à faire décroître le débit de carburant injecté dans ladite turbomachine, par un dispositif de dosage (20) auquel il est relié, jusque ledit débit fixe prédéterminé Wps.

3. Dispositif de protection selon la revendication 2, **caractérisé en ce que** ledit débit fixe prédéterminé Wps est délivré par une sortie d'utilisation (204) dudit doseur.

4. Dispositif de protection selon la revendication 2, **caractérisé en ce que** ledit débit fixe prédéterminé Wps est délivré par un orifice d'utilisation (249) dudit clapet de survitesse.

5. Dispositif de protection selon la revendication 2, **caractérisé en ce que** ledit premier signal hydraulique correspond à une pression basse Pb lorsque ladite vitesse de rotation de la turbomachine est inférieure à ladite vitesse maximale autorisée et à une pression supérieure Psf lorsque cette vitesse de rotation (N) excède ladite vitesse maximale autorisée (N_LIMIT).

6. Dispositif de protection selon la revendication 5, **caractérisé en ce que** ladite pression supérieure Psf est égale à une pression haute P1 disponible en sortie d'une pompe haute pression (12) d'injection de carburant.

7. Dispositif de protection selon la revendication 1, **caractérisé en ce que** le maintien dudit débit fixe prédéterminé lorsque ladite vitesse de rotation de la turbomachine redevient inférieure à ladite vitesse maximale autorisée est obtenu par un second signal hydraulique (Px2) mis à ladite pression supérieure Psf et qui vient s'additionner audit premier signal hydraulique pour déplacer à l'encontre d'un ressort (254) un tiroir hydraulique (250) dudit clapet de survitesse.

8. Dispositif de protection selon la revendication 7, **caractérisé en ce que** ledit second signal hydraulique est obtenu à partir d'un signal hydraulique de commande (Px0) généré au travers dudit dispositif de dosage (20) à partir de ladite pression supérieure Psf.

9. Procédé de protection contre les survitesses dans un moteur d'aéronef dont la vitesse de rotation est contrôlée, au travers d'un circuit de commande électronique (14), par une manette de contrôle des gaz (16), procédé dans lequel on limite à un débit fixe prédéterminé Wps l'alimentation en carburant dudit moteur lorsque ladite vitesse de rotation excède une vitesse maximale autorisée, puis on maintient ce débit fixe prédéterminé lorsque ladite vitesse de rotation redevient inférieure à ladite vitesse maximale autorisée, et enfin on ramène cette alimentation en carburant à un débit Wr correspondant à un régime de ralenti lorsque ladite manette de contrôle des gaz envoie une commande de ralenti audit moteur par l'intermédiaire dudit circuit de commande électronique.

**Claims**

1. A protection system for providing a turbomachine with protection against excess speed, in which machine the speed of rotation is controlled by a throttle control lever (16) acting via an electronic control circuit (14), the system comprising means (20, 22, 24) for limiting the fuel feed of said turbomachine to a predetermined fixed flow rate Wps when said speed of rotation exceeds an authorised maximum speed, the system being **characterised in that** it further comprises means (20, 22, 24) for maintaining this fuel feed at said predetermined fixed flow rate while said speed of rotation drops below said authorised maximum speed, and means (20, 22, 24) for returning said fuel feed to a flow rate Wr corresponding to an idling speed when said throttle control lever issues an idling command to said turbomachine via said electronic control circuit.

2. A protection system according to claim 1, **characterised in that** said means for limiting the fuel feed to a predetermined fixed flow rate Wps comprise an electronic circuit (18) for detecting excess speed and producing an electrical signal (I) whenever the speed of rotation (N) of the turbomachine exceeds an authorised maximum speed (N_LIMIT), an excess speed solenoid valve (22) connected to said electronic circuit for detecting excess speed and delivering a first hydraulic signal (Px1) from said electrical signal, and an excess speed valve (24) whose position is controlled by said first hydraulic signal to act by means of a metering valve (20) to which it is connected so as to cause the flow rate of fuel injected into said turbomachine to decrease until the rate reaches said predetermined fixed rate Wps.

3. A protection system according to claim 2, **characterised in that** said predetermined fixed flow rate Wps is delivered by a utilization outlet (204) of said metering valve.

4. A protection system according to claim 2, **characterised in that** said predetermined fixed flow rate Wps is delivered by a utilization orifice (249) of said excess speed valve.

5. A protection system according to claim 2, **characterised in that** said first hydraulic signal corresponds to a low pressure Pb when said speed of rotation of the turbomachine is less than said authorised maximum speed, and to a higher pressure Psf when said speed of rotation (N) exceeds said authorised maximum speed (N_LIMIT).

6. A protection system according to claim 5, **characterised in that** said higher pressure Psf is equal to a high pressure P1 available at the outlet from a high pressure fuel injection pump (12).

7. A protection system according to claim 1, **characterised in that** said predetermined fixed flow rate is maintained while said speed of rotation of the turbomachine drops below said authorised maximum speed by means of a second hydraulic signal (Px2) set to said higher pressure Psf and added to said first hydraulic signal so as to move a hydraulic slider (250) of said excess speed valve against a spring (254).

8. A protection system according to claim 7, **characterised in that** said second hydraulic signal is obtained from a hydraulic control signal (Px0) generated via said metering valve (20) from said higher pressure Psf.

9. A method of protecting an aircraft engine against excess speed in which the speed of rotation of the engine is controlled by a throttle control lever (16) acting via an electronic control circuit (14), in which method the fuel feed to said engine is limited to a predetermined fixed flow rate Wps when said speed of rotation exceeds an authorised maximum speed, and said predetermined fixed flow rate is then maintained while said speed of rotation drops below said authorised maximum speed, and finally said fuel feed is brought down to a flow rate Wr corresponding to an idling speed when said throttle control lever issues an idling control to said engine via said electronic control circuit.

**Patentansprüche**

1. Schutzvorrichtung zum Schutz einer Turbomaschine, deren Drehzahl gesteuert wird, gegen Überdrehzahlen über einen elektronischen Steuerkreis (14) mittels eines Gassteuerhebels (16), wobei die Vorrichtung Mittel (20, 22, 24) aufweist, mit denen, wenn die Drehzahl einen maximal zulässigen Wert überschreitet, der Kraftstoffdurchfluß zur Versorgung der Turbomaschine auf einen festgelegten, vorbestimmten Wert Wps begrenzt wird, **dadurch gekennzeichnet, daß** sie außerdem Mittel (20, 22, 24), um diesen Kraftstoffdurchfluß auf diesem festgelegten vorbestimmten Wert zu halten, wenn die maximal zulässige Drehzahl wieder unterschritten wird, und Mittel (20, 22, 24), um diesen Kraftstoffdurchfluß auf einen dem Leerlauf entsprechenden Wert Wr zurückzustellen, wenn der Gassteuerhebel über den elektronischen Steuerkreis der Turbomaschine einen Leerlaufbefehl sendet, aufweist.

2. Schutzvorrichtung nach Anspruch 1, **dadurch gekennzeichnet, daß** die Mittel zur Begrenzung des Kraftstoffdurchflusses auf einen festgelegten vorbestimmten Wert Wps einen elektronischen Schaltkreis zum Erfassen der Überdrehzahl (18), welcher ein elektrisches Signal (I) erzeugt, wenn eine Drehzahl der Turbomaschine (N) eine maximal zulässige Drehzahl (N_LIMIT) überschreitet, ein Überdrehzahl-Magnetventil (22), das mit dem elektronischen Schaltkreis zum Erfassen der Überdrehzahl verbunden ist und aufgrund des elektrischen Signals ein erstes hydraulisches Signal (Px1) ausgibt, und ein Überdrehzahlventil (24), dessen Stellung durch das erste hydraulische Signal derart gesteuert wird, daß der Durchfluß des in die Turbomaschine eingespritzten Kraftstoffs über eine mit dem Überdrehzahlventil verbundene Dosiervorrichtung (20) auf den festgelegten, vorbestimmten Wert Wps verringert wird, aufweisen.

3. Schutzvorrichtung nach Anspruch 2, **dadurch gekennzeichnet, daß** der für den Kraftstoffdurchfluß festgelegte vorbestimmte Wert Wps über einen Verwendungsausgang (204) des Dosierers ausgegeben wird.

4. Schutzvorrichtung nach Anspruch 2, **dadurch gekennzeichnet, daß** der für den Kraftstoffdurchfluß festgelegte vorbestimmte Wert Wps über eine Verwendungsöffnung (249) des Überdrehzahlventils ausgegeben wird.

5. Schutzvorrichtung nach Anspruch 2, **dadurch gekennzeichnet, daß** das erste hydraulische Signal einem niedrigen Druck Pb entspricht, wenn die Drehzahl der Turbomaschine die maximal zulässige Drehzahl unterschreitet, und einem höheren Druck Psf entspricht, wenn diese Drehzahl (N) die maximal zulässige Drehzahl (N_LIMIT) überschreitet.

6. Schutzvorrichtung nach Anspruch 5, **dadurch gekennzeichnet, daß** der höhere Druck Psf einem am Ausgang einer Hochdruckpumpe (12) zur Kraftstoffeinspritzung anliegenden hohen Druck P1 entspricht.

7. Schutzvorrichtung nach Anspruch 1, **dadurch gekennzeichnet, daß**, wenn die Drehzahl der Turbomaschine die maximal zulässige Drehzahl wieder unterschreitet, der für den Kraftstoffdurchfluß festgelegte vorbestimmte Wert durch ein zweites hydraulisches Signal (Px2) aufrechterhalten wird, welches mit dem höheren Druck Psf beaufschlagt und dem ersten hydraulischen Signal zugefügt wird, um einen hydraulischen Schieber (250) des Überdrehzahlventils entgegen der Kraft einer Feder (254) zu verschieben.

8. Schutzvorrichtung nach Anspruch 7, **dadurch gekennzeichnet, daß** das zweite hydraulische Signal aufgrund eines hydraulischen Steuersignals (Px0) erzielt wird, welches aufgrund des höheren Drucks Psf über die Dosiervorrichtung (20) erzeugt wird.

9. Verfahren zum Schutz eines Motors eines Luftfahrzeugs, dessen Drehzahl gesteuert wird, gegen Überdrehzahlen über einen elektronischen Steuerkreis (14) mittels eines Gassteuerhebels (16), nach welchem Verfahren, wenn die Drehzahl einen maximal zulässigen Wert überschreitet, der Kraftstoffdurchfluß zur Versorgung der Turbomaschine auf einen festgelegten, vorbestimmten Wert Wps begrenzt wird, dieser Kraftstoffdurchfluß auf diesem festgelegten vorbestimmten Wert gehalten wird, wenn die maximal zulässige Drehzahl wieder unterschritten wird, und schließlich dieser Kraftstoffdurchfluß auf einen dem Leerlauf entsprechenden Wert Wr zurückgestellt wird, wenn der Gassteuerhebel über den elektronischen Steuerkreis dem Motor einen Leerlaufbefehl sendet.

FIG.1A

EP 1 217 190 B1

FIG.1B

P

N

test

I = I_null

22

16

14

18

220

Pb

224

Psf

222

Psf

26

Px1=Pb

24  244

254

256

Px0=Psf

248

249

20

252

Px2=Pb

15

206

208

246

250

247

214

P2 → Wf

12

200

242

240

13

P1

212

210

202

EP 1 217 190 B1

FIG.2A

P

N

16

14

test

18

I ≠ I_null

22

Pb

Psf

Px1=Psf

24

244

254

252

Px2=Psf

15

20

208

Px0=Psf

246

Psf

250

P2 → Wps

13

204

P1

210

202

EP 1 217 190 B1

FIG.2B

FIG.3A

EP 1 217 190 B1

FIG.3B

FIG.4A

P

N

test

I = I_null

14

18

16

22

Pb

Psf

Px1=Pb

24

20

208

Px0=P_null

246

Px2=Pb

15

Psf

250

P2 → Wr

204

13

P1

210

EP 1 217 190 B1

FIG.4B

P

N

test

I = I_null

16

14

18

22

Pb

Psf

Px1=Pb

26

Psf

24

248

256

249

Px2=Pb

20

208

Px0=P_null

246

15

Psf

250

P2 → Wr

13

210

P1

EP 1 217 190 B1

16